# FASCICULE DE BREVET EUROPEEN

(11) **EP 1 220 969 B1**
(45) Date de publication et mention de la délivrance du brevet: **04.06.2003**
(21) Numéro de dépôt: 00964359.4
(22) Date de dépôt: 25.09.2000
(51) Int. Cl.: E04H 4/12, F16L 9/22

(54) **SYSTEME DE CANALISATION POUR DISPOSITIF DE FILTRATION ET DE POMPAGE DE L'EAU D'UN BASSIN DE PISCINE**
LEITUNGSSYSTEM FÜR EINE PUMPEN- UND FILTEREINRICHTUNG IN EINEM SCHWIMMBECKEN
PIPE SYSTEM FOR DEVICE FILTERING AND PUMPING WATER IN A SWIMMING POOL

(30) Priorité: 11.10.1999 FR 9912856
(43) Date de publication de la demande: 10.07.2002
(73) Titulaire: PISCINES DESJOYAUX SA, 42480 La Fouillouse (FR)
(72) Inventeur: DESJOYAUX, Jean-Louis, F-42580 L'Etrat (FR); DESJOYAUX, Pierre-Louis, F-42480 La Fouillouse (FR); JANDROS, Catherine, F-42580 L'Etrat (FR)
(74) Mandataire: Thivillier, Patrick
(86) Numéro de dépôt international: FR0002641
(87) Numéro de publication internationale: WO01027413

(56) Documents cités:
- WO-A-96/12075
- US-A- 3 220 553

## Description

L'invention se rattache au secteur technique des canalisations pour le passage de l'eau et destinées au raccordement des organes de filtration et de pompage que présentent les dispositifs d'aspiration et de refoulement de l'eau des bassins de piscines.

Plus particulièrement, l'invention concerne des canalisations destinées à relier les organes de filtration et de pompage montés dans des compartiments que présente un ensemble constituant soit un bloc compact rapporté destiné à être monté sur des panneaux constituant l'ensemble du bassin de la piscine, soit directement un panneau filtrant destiné à être monté et assemblé en continuité avec les autres panneaux constitutifs du bassin de la piscine. D'une manière générale et quelle que soit la forme de réalisation, l'ensemble comporte un compartiment interne immergé dans l'eau et destiné à recevoir les organes de filtration et un compartiment situé en dehors de l'eau du bassin de la piscine et destiné à recevoir les organes de pompage.

Pour l'essentiel, l'eau en provenance du bassin de la piscine est aspirée au travers d'une bouche dénommée "skimmer", passe au travers des organes de filtration et est refoulée dans le bassin de la piscine par des buses frontales et/ou latérales, en fonction notamment de la forme de réalisation de l'ensemble compact recevant les moyens de filtration et de pompage. Aussi bien du côté du compartiment d'aspiration que du côté du compartiment de pompage, les canalisations d'aspiration et de refoulement sont constituées par une pluralité d'éléments de tuyauterie en PVC notamment, se présentant sous forme de manchons rectilignes ou de coudes à 90° notamment. Ce système nécessite un nombre de pièces très important. En outre, l'assemblage des coudes et des manchons s'effectue dans des conditions délicates si l'on considère l'orientation angulaire qu'il est nécessaire de donner à ces différents éléments. Ainsi, l'opérateur est obligé de procéder à un pré-assemblage des éléments, de repérer l'orientation angulaire adéquate, de marquer cette orientation angulaire par un trait de feutre par exemple, de redémonter les éléments pour les assembler de nouveau dans l'orientation angulaire préalablement déterminée. Il n'y a aucune standardisation des produits d'où un nombre de pièces très élevé et par conséquent un temps de montage et d'assemblage très important avec des risques de fuite.

Cet état de la technique peut être illustré par l'enseignement de la demande de brevet WO 9612075.

L'invention s'est fixée pour but de remédier à ces inconvénients, de manière simple, sûre, efficace et rationnelle.

Le problème que se propose de résoudre l'invention est de simplifier et de rationaliser la liaison entre les moyens de filtration et de pompage pour le traitement de l'eau des bassins de piscine, en ayant pour objectif de diminuer les coûts en réduisant le nombre de pièces nécessaires et en facilitant le montage, en supprimant tout risque d'erreur et de fuite.

Pour résoudre un tel problème, il a été conçu et mis au point un système de canalisation comprenant :
* du côté du compartiment de filtration et pour l'aspiration :
   - un ensemble composé de deux coudes à 90° assemblés et indexés angulairement, l'un des coudes présentant des agencements d'accouplement avec le fond de l'organe filtrant, tandis que l'autre coude présente des agencements d'accouplement avec un élément rectiligne;
   - l'élément rectiligne est accouplé à son autre extrémité avec un coude à 90° identique avec le précédent, ledit coude coopérant avec des moyens aptes à assurer la traversée, d'une manière étanche, d'une paroi de séparation entre les compartiments;
* du côté du compartiment de pompage et pour l'aspiration, deux coudes à 90° assemblés et indexés angulairement et identiques l'un et l'autre aux autres coudes à 90°, l'un des coudes étant accouplé à un élément rectiligne relié à des moyens aptes à assurer la traversée, d'une manière étanche, de la paroi de séparation, l'autre coude étant relié du côté du refoulement de la pompe ;
* du côté du compartiment de pompage et pour le refoulement, deux coudes à 90° assemblés et indexés angulairement et identiques entre eux, l'un des coudes étant accouplé à un élément rectiligne relié à des moyens aptes à assurer la traversée, d'une manière étanche, de la paroi de séparation, l'autre coude étant relié du côté du refoulement de la pompe ;
* du côté du compartiment de filtration et pour le refoulement, un ensemble coudé présentant un évidement apte à être obturé à volonté, soit par un élément plein, soit par un élément présentant des agencements d'accouplement avec une buse de refoulement latéral, l'une des extrémité dudit ensemble présentant des agencements d'accouplement avec les moyens de traversée étanche de la paroi, tandis que l'autre extrémité présente des agencements d'accouplement avec une buse de refoulement frontale.

Pour résoudre le problème d'assurer la liaison avec un organe filtrant et au niveau de l'aspiration, les agencements d'accouplement de l'ensemble avec le fond de l'organe filtrant, sont constitués par une plaque d'appui évidée formée à proximité de l'une des extrémités de l'un des coudes, de sorte que ladite extrémité déborde de la plaque pour permettre le centrage d'un puits cylindrique recevant le moyen de filtration et dont le fond prend appui sur ladite plaque par l'intermédiaire d'un joint de compression.

Pour résoudre le problème d'assurer le refoulement de l'eau au niveau du compartiment d'aspiration, les extrémités de l'ensemble coudé sont parallèles et déportées l'une de l'autre en étant raccordées par un élément transversal rectiligne.

Un autre problème que se propose de résoudre l'invention, est de pouvoir utiliser, pour le refoulement de l'eau, le même élément de base afin de tenir compte de la conception de l'ensemble compact, soit sous forme d'un bloc rapporté, soit sous forme d'un panneau susceptible d'être intégré avec les panneaux adjacents du bassin de la piscine.

Pour résoudre un tel problème :
- l'évidement de l'ensemble coudé est formé au niveau de l'élément rectiligne et de ses zones de raccordement arrondies avec les extrémités, ledit évidement délimitant une coquille de section semi-circulaire ;
- l'élément d'obturation de l'évidement est constitué par une coquille de section complémentaire et semi-circulaire ;
- l'élément d'obturation de l'évidement est constitué par une coquille de section complémentaire et semi-circulaire en communication avec un manchon circulaire formé en débordement de ses génératrices et dont l'extrémité libre présente les agencements d'accouplement avec la buse de refoulement latérale ;
- la coquille est rendue solidaire de l'évidement d'une manière étanche.

Pour résoudre le problème posé de pouvoir assembler les différents éléments constitutifs du système de canalisation, selon des orientations angulaires préétablies, les moyens d'indexation angulaire sont constitués par des ergots internes formés aux extrémités des coudes et/ou éléments, et aptes à coopérer avec des encoches internes complémentaires formées en bout des éléments et/ou coudes.

L'invention est exposée ci-après plus en détail à l'aide des figures des dessins annexés dans lesquels :
- la figure 1 est une vue en coupe partielle, à caractère schématique, montrant un ensemble d'aspiration pour bassin de piscine et le principe du système de canalisation ;

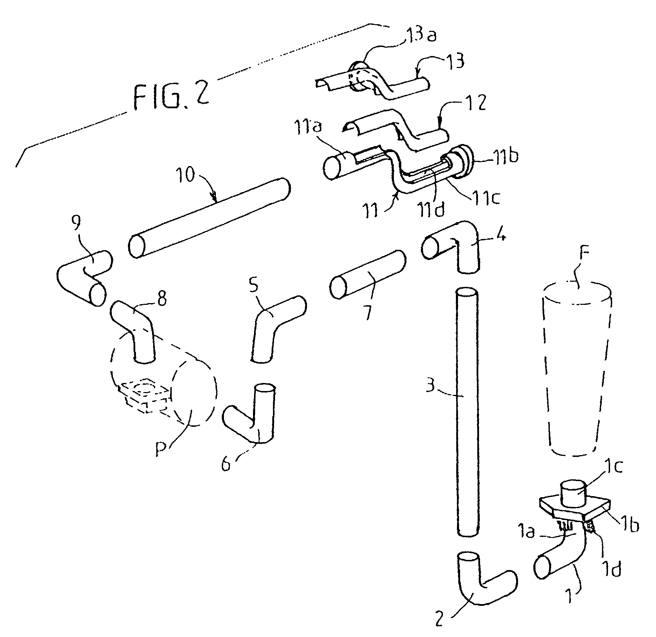

- la figure 2 est une vue en perspective montrant les principaux éléments du système de canalisation ;

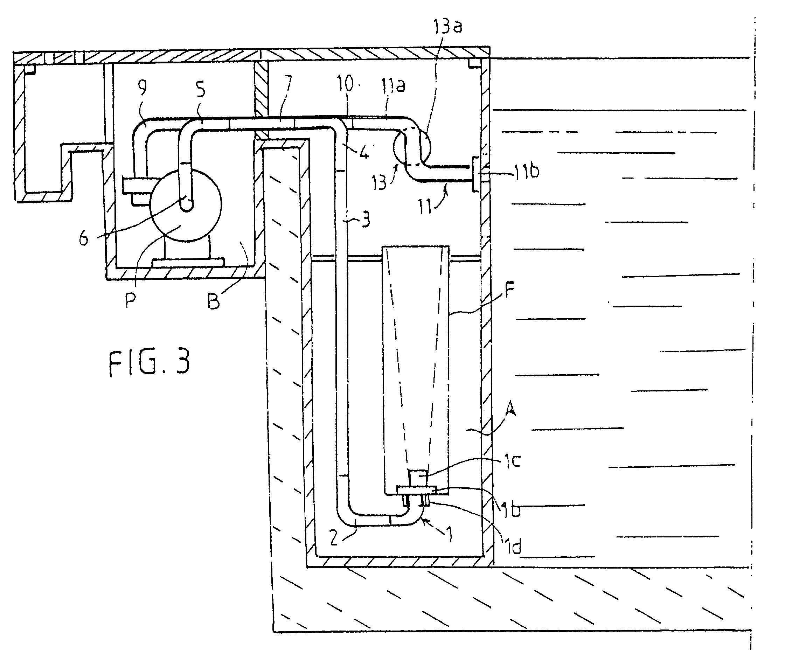

- la figure 3 est une vue en coupe longitudinale montrant un ensemble de filtration de piscine équipé du système de canalisation selon l'invention ;

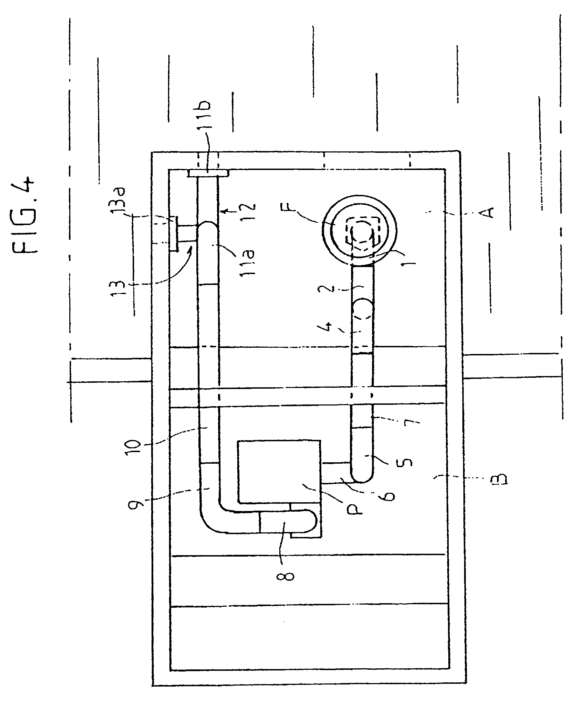

- la figure 4 est une vue en plan et en coupe correspondant à la figure 3;

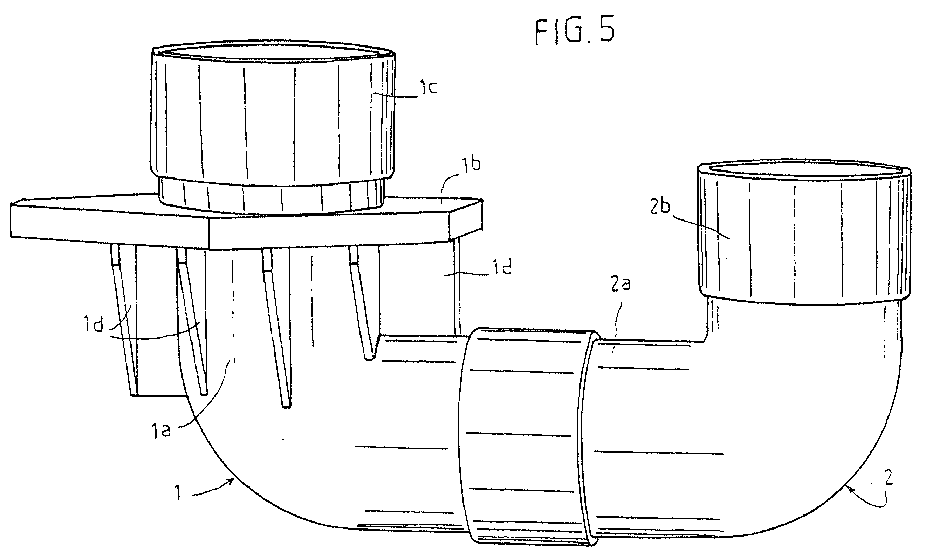

- la figure 5 est une vue en perspective montrant l'ensemble d'accouplement avec le fond de l'organe de filtration ;

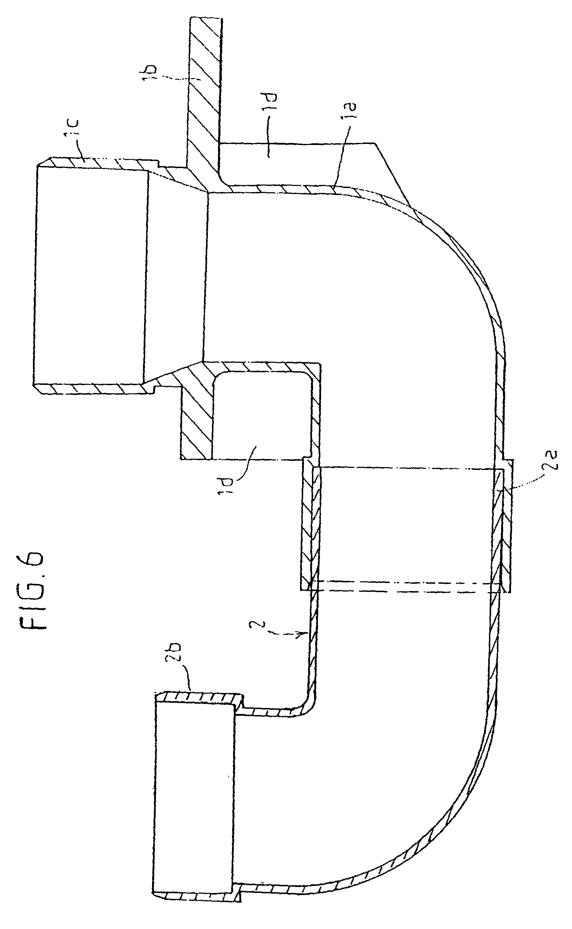

- la figure 6 est une vue en coupe longitudinale de l'ensemble illustré figure 5 ;

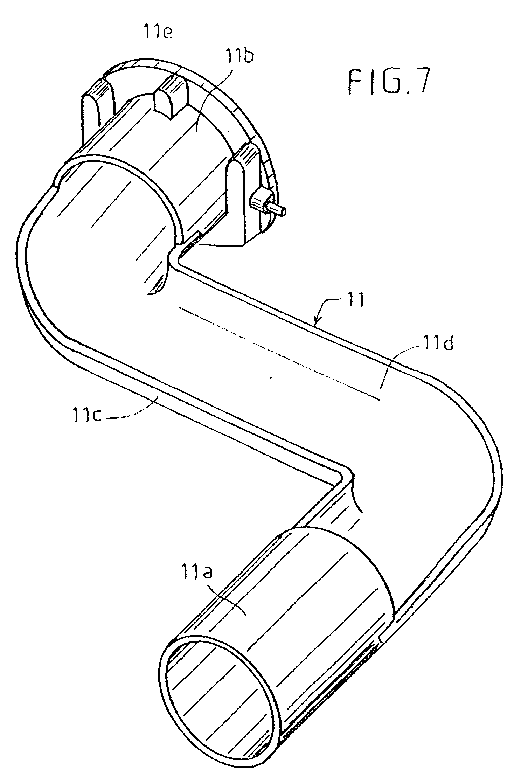

- la figure 7 est une vue en perspective de l'ensemble coudé pour le refoulement de l'eau et avant mise en place de l'élément d'obturation de l'évidement ;

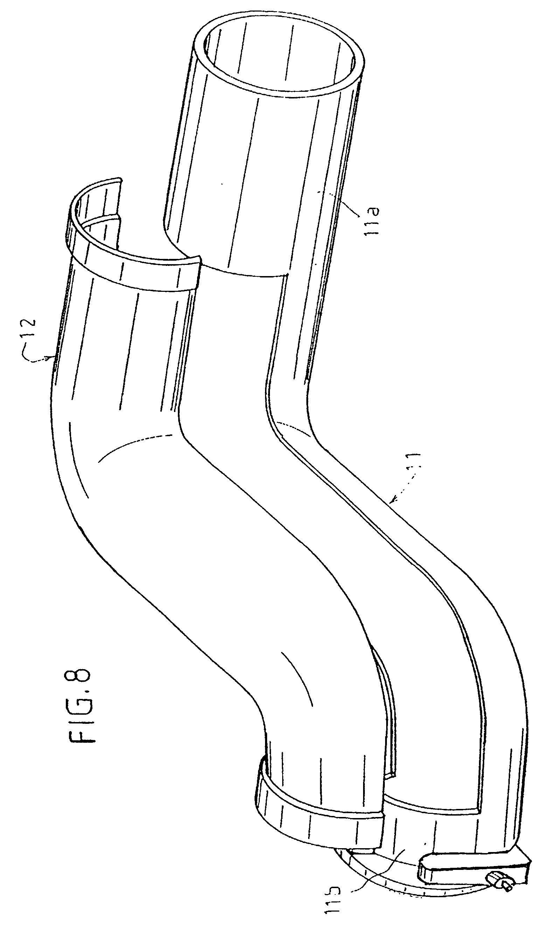

- la figure 8 est une vue en perspective correspondant à la figure 7 après mise en place de l'élément d'obturation, dans le cas où ce dernier est constitué par une simple coquille, de section complémentaire semi-circulaire ;

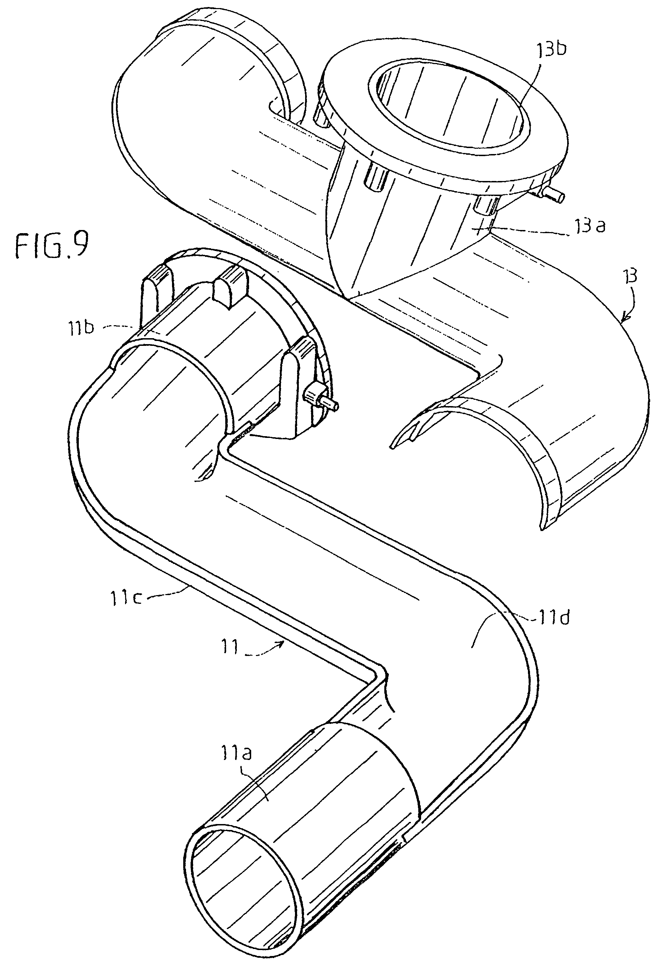

- la figure 9 est une vue en perspective correspondant à la figure 7 dans le cas où l'élément d'obturation est constitué par une coquille de section complémentaire semi-circulaire et équipée d'un agencement pour le montage d'une base de refoulement latéral ;
- les figures 10 et 11 sont, à plus grande échelle, des vues en coupe d'exemples d'assemblage de l'élément d'obturation.

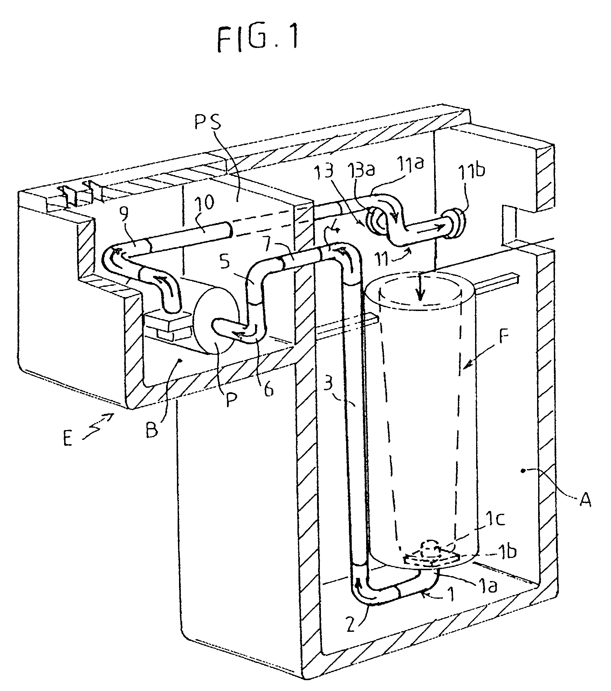

On a illustré figure 1, à titre d'exemple indicatif non limitatif, un ensemble compact de filtration de bassin de piscine.

Cet ensemble (E) comprend un compartiment (A) immergé dans l'eau et recevant des moyens de filtration (F). L'ensemble (E) comporte un autre compartiment (B) situé à l'extérieur du bassin de la piscine et recevant les moyens de pompage (P). D'une manière parfaitement connue, l'ensemble (E) petit constituer un bloc compact monté en chevauchement des panneaux ou autres constituant le bassin de la piscine. Ou bien cet ensemble (E) peut constituer un panneau filtrant présentant des agencements d'assemblage et de montage en juxtaposition avec les panneaux adjacents constituant le bassin de la piscine. Les moyens de filtration (F) sont constitués d'une cartouche ou poche filtrante montée d'une manière amovible dans un bol ou puits constitué par un manchon cylindrique monté verticalement dans le compartiment (A) destiné à recevoir l'eau en provenance du bassin de la piscine au moyen d'une bouche dénommée (skimmer). Les organes de pompage (P) sont constitués par au moins une pompe mono ou bi-vitesse.

Le système de canalisation peut être décomposé en quatre zones :
- une zone d'aspiration située dans le compartiment de filtration (A),
- une zone d'aspiration située dans le compartiment de pompage (B).
- une zone de refoulement située dans le compartiment de pompage (B),
- une zone de refoulement située dans le compartiment de filtration (A).

La zone d'aspiration située du côté du compartiment de filtration, comprend un ensemble composé de deux coudes à 90° (1) et (2) assemblés et indexés angulairement. L'un des coudes (1) présente des agencements d'accouplement, avec le fond de l'organe filtrant notamment avec le fond d'un puits vertical recevant l'élément de filtration en tant que tel.

Par exemple, l'une des branches (1a) du coude (1) présente très sensiblement à mi-hauteur une plaque d'appui horizontale (1b). Il en résulte que l'extrémité (1c) du coude (1) qui déborde de la plaque (1b) constitue un manchon de centrage coopérant avec une ouverture complémentaire formée dans le fond du puits recevant l'élément de filtration en tant que tel. Le fond du puits prend appui sur la plaque (1b) par l'intermédiaire d'un joint d'étanchéité permettant ainsi à l'ensemble du puits recevant l'organe de filtration d'être légèrement soulevé par rapport au manchon (1c) en cas de désamorçage de la pompe pour garantir un apport d'eau minimum évitant à la pompe de tourner à sec préservant ainsi les garnitures mécaniques d'étanchéité.

Avantageusement, l'ensemble du coude (1) avec la plaque d'appui (1b) est obtenu par injection de matière plastique. La plaque (1b) est raccordée au corps du coude (1) par des ailettes verticales de rigidité (1d).

Comme indiqué, les deux coudes (1 et 2) sont assemblés et indexés angulairement. Les moyens d'indexation sont constitués par des ergots internes formés périphériquement en bout de l'extrémité de la branche (1b) du coude. Ces ergots sont destinés à coopérer avec des encoches complémentaires formées à l'extrémité de la branche (2a) du coude (2). Par exemple, les ergots et les encoches sont régulièrement répartis sur la circonférence en étant décalés de 90°. L'autre branche (2b) du coude (2) est destinée à être accouplée avec un élément rectiligne (3). L'autre extrémité de l'élément rectiligne (3), à l'opposé de son extrémité d'accouplement avec le coude à 90° (2), est raccordée à un autre coude (4) à 90°, identique audit coude (2). Ce coude (4) coopère avec des moyens aptes à assurer la traversée, d'une manière étanche, d'une paroi de séparation (PS) entre les compartiments (A et B). La fixation, dans la position angulaire souhaitée, des coudes (1) et (2) de l'élément rectiligne et du coude (4), s'effectue par collage notamment.

La zone d'aspiration située dans le compartiment de pompage comprend deux coudes à 90° (5) et (6) identiques l'un et l'autre aux coudes (2) et (4) accouplés à l'élément rectiligne (3). Les deux coudes (5) et (6) sont assemblés et indexés angulairement, de manière à être orientés selon deux plans différents. Le coude (5) est accouplé à un élément rectiligne (7) de raccordement aux moyens aptes à assurer la traversée étanche de la paroi (PS). L'autre coude (6) est relié sur la prise d'aspiration de la pompe (P) par tout moyen connu et approprié.

Compte tenu de ces dispositions, il en résulte que pour l'aspiration, le système de canalisation comprend seulement quatre coudes identiques à 90° (2, 4, 5, 6), un coude à 90° (1) présentant directement au moulage le moyen d'accouplement avec les organes de filtration et deux éléments rectilignes (3 et 7) susceptibles d'être coupés à la longueur désirée. Le manchon (7) est destiné à être accouplé aux moyens de traversée étanche de la paroi.

Au niveau de la zone de refoulement située du côté du compartiment de pompage, le système de canalisation comprend deux coudes identiques à 90° (8) et (9) assemblés et indexés angulairement. Ces deux coudes (8) et (9) sont de longueur et de diamètre supérieurs à ceux des autres coudes à 90° (2, 4, 5 et 6). L'extrémité libre du coude (8) est accouplée par tout moyen connu et approprié à la prise de refoulement de la pompe (P). L'extrémité libre de l'autre coude (9) est accouplée à un élément rectiligne (10) apte à assurer la traversée, d'une manière étanche, de la paroi de séparation (PS). Bien évidemment, l'orientation et l'indexation angulaire des coudes (8 et 9) dépend du positionnement de la pompe et de la zone de traversée étanche de la paroi de séparation.

Au niveau de la zone de refoulement située dans le compartiment de filtration, le système de canalisation comprend un ensemble coudé (11) présentant deux extrémités sensiblement parallèles (11a) et (11b). Les deux extrémités (11a) et (11b) sont déportées et reliées par une branche transversale (11c) de manière à constituer un ensemble coudé sous forme très sensiblement d'un S. L'extrémité libre de la partie (11a) présente des agencements d'accouplement avec les moyens de traversée étanche de la paroi de séparation (PS). L'extrémité libre de la partie (1 1b) présente des agencements d'accouplement (11c) avec une buse de refoulement frontal.

Selon une caractéristique importante, l'ensemble coudé (11) présente un évidement (11d) qui peut être obturé soit par un élément plein (12), soit par un élément (13) présentant des agencements d'accouplement (13b) avec une buse de refoulement latéral. L'ensemble coudé (11) et les éléments d'obturation (12) ou (13) sont obtenus par injection d'une matière plastique

L'évidement (11d) est formé au niveau de l'élément rectiligne (11c) et des zones de raccordement arrondies avec les extrémités (11a) et (11b) de l'élément (11c), ledit évidement (11d) délimitant une coquille de section semi-circulaire.

L'élément d'obturation (12) est constitué par une coquille de section complémentaire et semi-circulaire. Cet élément (12) est utilisé dans le cas où il est nécessaire de disposer seulement d'une buse de refoulement frontal. C'est le cas où l'ensemble compact de filtration constitue un panneau en tant que tel.

L'élément (13), de la même façon que l'élément (12), est constitué par une coquille de section complémentaire semi-circulaire en communication avec un manchon circulaire (13a) formé perpendiculairement en débordement de ses génératrices et dont l'extrémité libre présente les agencements d'accouplement (13b) avec la buse de refoulement latéral. Dans cette forme de réalisation, l'ensemble coudé présente donc des agencements pour un refoulement frontal et un refoulement latéral. L'intérêt de ces deux buses se trouve dans le cas où l'ensemble de filtration constitue un bloc compact rapporte et monté en chevauchement des parois ou panneaux constituant le bassin de la piscine.

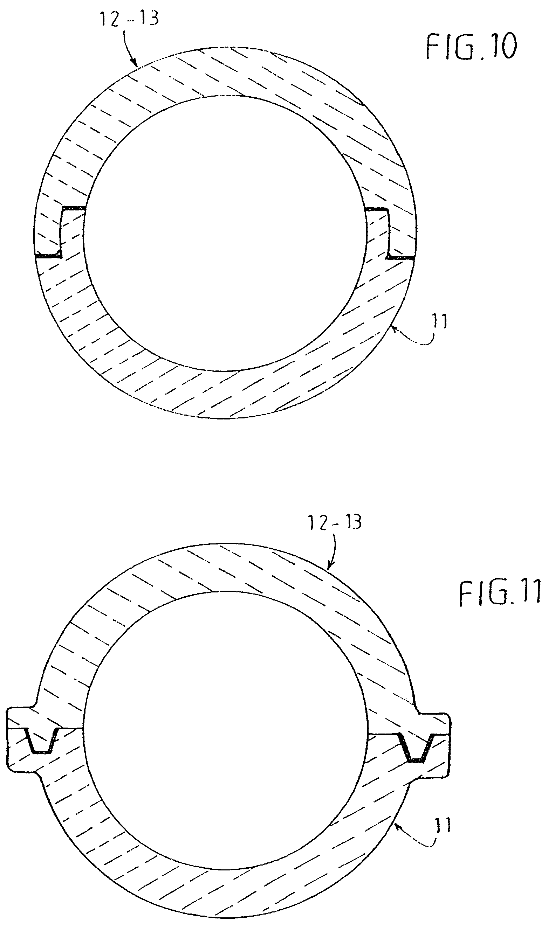

L'assemblage des éléments (12) et (13) sur l'ensemble coudé (11), s'effectue avantageusement par collage. De même, l'ensemble coudé (11) et les éléments d'obturation (12) et (13) peuvent présenter des agencements complémentaires d'indexation. On renvoie aux figures 10 et 11 qui montrent des exemples illustratifs nullement limitatifs, l'assemblage étanche. Les diamètres des différents éléments constitutifs du système de canalisation selon les caractéristiques de l'invention sont convenablement déterminés en fonction du débit d'eau à traiter et des caractéristiques du ou des moyens de pompage.

Les avantages ressortent bien de la description, en particulier on souligne et on rappelle :
- la standardisation des éléments ;
- la diminution du nombre d'éléments nécessaires à l'ensemble de l'installation permettant de diminuer les coûts d'une manière importante ;
- la facilité de montage sans nécessiter une qualification particulière compte tenu des moyens d'indexation que présentent les différents éléments ;
- la rapidité de l'installation ;
- la qualité des résultats obtenus.

## Revendications

1. Système de canalisation pour dispositif de filtration et de pompage de l'eau d'un bassin de piscine comprenant des moyens de filtration et des moyens de pompage logés chacun dans un ensemble compact monté avec les panneaux notamment du bassin de la piscine, ledit ensemble comportant et un compartiment (A) recevant les moyens de filtration en communication avec l'eau du bassin, un compartiment (B) en dehors de l'eau recevant les moyens de pompage, **caractérisé en ce qu'**il comprend :
* du côté du compartiment de filtration (A) et pour l'aspiration :
- un ensemble compose de deux coudes à 90° (1) et (2) assemblés et indexés angulairement, l'un des coudes (1) présentant des agencements d'accouplement (1b) avec le fond de l'organe recevant les moyens de filtration, tandis que l'autre coude (2) présente des agencements d'accouplement avec un élément rectiligne (3) ;
- l'élément rectiligne (3) est accouplé à son autre extrémité avec un coude à 90° (4) identique avec le précédent (2), ledit coude (4) coopérant avec des moyens aptes à assurer la traversée, d'une manière étanche, d'une paroi de séparation entre les compartiments (A) et (B) ;
* du côté du compartiment de pompage (B) et pour l'aspiration, deux coudes à 90° (5) et (6) assemblés et indexés angulairement et identiques l'un et l'autre aux autres coudes à 90° (4) et (2), l'un des coudes (5) étant accouplé a un élément rectiligne (7) relié à des moyens aptes à assurer la traversée, d'une manière étanche, de la paroi de séparation, l'autre coude (6) étant relié sur la prise d'aspiration de la pompe ;
* du côté du compartiment de pompage (B) et pour le refoulement, deux coudes à 90° (8) et (9) assemblés et indexés angulairement et identiques, l'un des coudes (9) étant accouplé à un élément rectiligne (10) relié à des moyens aptes à assurer la traversée, d'une manière étanche, de la paroi de séparation, l'autre coude (8) étant relié du côté du refoulement de la pompe ;
* du côté du compartiment de filtration et pour le refoulement, un ensemble coudé (11) présentant un évidement (11d) apte à être obturé à volonté, soit par un élément plein (12), soit par un élément (13) présentant des agencements d'accouplement (13b) avec une buse de refoulement latéral, l'une des extrémité dudit ensemble présentant des agencements d'accouplement avec les moyens de traversée étanche de la paroi, tandis que l'autre extrémité présente des agencements d'accouplement (11e) avec une buse de refoulement frontale.

2. Système de canalisation selon la revendication 1, **caractérisé en ce que** les agencements d'accouplement de l'ensemble (1-2) avec le fond de l'organe recevant les moyens de filtration, sont constitués par une plaque d'appui (1b) évidée formée à proximité de l'une des extrémités de l'un des coudes (1), de sorte que ladite extrémité déborde de la plaque (1b) pour permettre le centrage d'un puits cylindrique recevant le moyen de filtration et dont le fond prend appui sur ladite plaque par l'intermédiaire d'un joint de compression.

3. Système de canalisation selon la revendication 1, **caractérisé en ce que** les extrémités (11a) et (11b) de l'ensemble coudé (11) sont parallèles et déportées l'une de l'autre en étant raccordées par un élément transversal rectiligne (11c).

4. Système de canalisation selon la revendication 1, **caractérise en ce que** l'évidement (11d) de l'ensemble coude (11) est formé au niveau de l'élément rectiligne (11c) et de ses zones de raccordement arrondies avec les extrémités (11a et 11b), ledit évidement (11d) délimitant une coquille de section semi-circulaire.

5. Système de canalisation selon la revendication 4, **caractérisé en ce que** l'élément d'obturation de l'évidement (11d) est constitué par une coquille (12) de section complémentaire et semi-circulaire.

6. Système de canalisation selon la revendication 4, **caractérisé en ce que** l'élément d'obturation de l'évidement (11d) est constitué par une coquille (13) de section complémentaire et semi-circulaire en communication avec un manchon circulaire (13a) formé en débordement de ses génératrices et dont l'extrémité libre présente les agencements d'accouplement avec la buse de refoulement latérale.

7. Système de canalisation selon l'une quelconque des revendications 5 et 6, **caractérisé en ce que** la coquille (12 ou 13) est rendue solidaire de l'évidement (11d) d'une manière étanche.

8. Système de canalisation selon la revendication 1, **caractérisé en ce que** les moyens d'indexation angulaire sont constitués par des ergots internes formés aux extrémités des coudes et/ou éléments, et aptes à coopérer avec des encoches internes complémentaires formées en bout des éléments et/ou coudes.

9. Système de canalisation selon la revendication 1, **caractérisé en ce que** l'ensemble coudé (11) et les éléments d'obturation (12) ou (13) sont obtenus par injection d'une matière plastique.

## Patentansprüche

1. Entwässerungssystem, Rohrleitungssystem für Wasserfiltrier- und Pumpanlage eines Schwimmbeckens mit Filter- und Pumpeinrichtungen, die jeweils in einer kompakten Einheit angeordnet sind, welche zusammen mit den Paneelen, insbesondere des Schwimmbeckens, montiert ist, wobei die Einheit die Filtereinrichtungen in Verbindung mit dem Wasser im Becken aufweist, die in einer Kammer (A) aufgenommen werden, und eine Kammer (B) außerhalb des Wassers die Pumpeinrichtungen aufnimmt, **dadurch gekennzeichnet, dass** es folgendes umfasst:
* auf der Seite der Filtrierkammer (A) und zur Ansaugung :
- eine Einheit bestehend aus zwei 90 ° Rohrkrümmern (1) und (2), die winklig montiert und indexiert sind, wobei einer der Rohrkrümmer (1) Anordnungen zum Anschluss (1b) an den Boden des Organs besitzt, das die Filtereinrichtungen aufnimmt, während der andere Rohrkrümmer (2) Anordnungen zum Anschluss an ein gerades Element (3) besitzt;
- das gerade Element (3) ist an seinem anderen Ende mit einem 90° Rohrkrümmer (4) verbunden, der mit dem vorhergehenden (2) identisch ist, wobei dieser Rohrkrümmer (4) mit Elementen in Verbindung steht, die die undurchlässige Durchführung einer Trennwand zwischen den Kammern (A) und (B) sicherstellen können ;
* auf der Seite der Pumpkammer (B) und zum Ansaugen zwei 90° Rohrkrümmer (5) und (6), die winklig montiert und indexiert sind und beide mit den anderen 90° Rohrkrümmern (4) und (2) identisch sind. wobei einer der Rohrkrümmer (5) mit einem geraden Element (7) verbunden ist, das mit Elementen in Verbindung steht, die die undurchlässige Durchführung der Trennwand sicherstellen können, und der andere Rohrkrümmer (6) an die Ansaugstelle der Pumpe angeschlossen ist;
* auf der Seite der Pumpkammer (B) und zum Fördern zwei 90° Rohrkrümmer (8) und (9), die winklig montiert, indexiert und identisch sind, wobei einer der Rohrkrümmer (9) mit einem geraden Element (10) verbunden ist, das mit Elementen in Verbindung steht, die die undurchlässige Durchführung der Trennwand sicherstellen können, und der andere Rohrkrümmer (8) an der Seite der Pumpenförderung angeschlossen ist;
* auf der Seite der Filtrierkammer und zum Fördern eine gekrümmte Einheit (11) mit einer Aussparung (11d), die bei Bedarf verschlossen werden kann, und zwar entweder durch ein massives Element (12) oder durch ein Element (13) mit Anordnungen zum Anschluss (13b) an eine seitliche Förderdüse, wobei eines der Enden der Einheit Anordnungen zum Anschluss an undurchlässige Durchführungselemente der Wand besitzt, während das andere Ende Anordnungen zum Anschluss (11e) an eine stirnseitige Förderdüse besitzt.

2. Entwässerungssystem, Rohrleitungssystem nach Anspruch 1, **dadurch gekennzeichnet, dass** die Anordnungen zum Anschluss der Einheit ( 1 - 2) an den Boden des Organs, das die Filtriereinrichtungen aufnimmt, aus einer durchbrochenen Tragplatte (1b) bestehen, die sich in unmittelbarer Nähe eines Endes der Rohrkrümmer (1) befindet, so dass das Ende über die Platte (1b) hinausragt, damit die Zentrierung eines zylindrischen Schachtes möglich ist, der die Filtriereinrichtung aufnimmt, und dessen Boden sich mittels einer Abquetschdichtung auf der genannten Platte abstützt.

3. Entwässerungssystem, Rohrleitungssystem nach Anspruch 1, **dadurch gekennzeichnet, dass** die Enden ( 11a) und (11b) der gekrümmten Einheit (11) parallel und verschoben zueinander angeordnet sind, indem sie durch ein schräg verlaufendes, gerades Element (11c) miteinander verbunden sind.

4. Entwässerungssystem, Rohrleitungssystem nach Anspruch 1, **dadurch gekennzeichnet, dass** die Aussparung (11d) der gekrümmten Einheit (11) in Höhe des geraden Elementes (11c) und seiner mit den Enden (11a und 11b) abgerundeten Verbindungszonen gebildet wird, wobei die Aussparung (11d) eine Kokille mit halbkreisförmigem Querschnitt abgrenzt.

5. Entwässerungssystem, Rohrleitungssystem nach Anspruch 4, **dadurch gekennzeichnet, dass** das Element zum Verschließen der Aussparung (11d) aus einer Kokille (12) mit zusätzlichem, halbkreisförmigem Querschnitt besteht.

6. Entwässerungssystem, Rohrleitungssystem nach Anspruch 4, **dadurch gekennzeichnet, dass** das Element zum Verschließen der Aussparung (11d) aus einer Kokille (13) mit zusätzlichem, halbkreisförmigem Querschnitt besteht, die mit einem kreisförmigen Stutzen (13a) in Verbindung steht, der durch Überlappen seiner Mantellinien gebildet wird, und dessen freies Ende Anordnungen zum Anschluss an die seitliche Förderdüse besitzt.

7. Entwässerungssystem, Rohrleitungssystem nach einem der Ansprüche 5 und 6, **dadurch gekennzeichnet, dass** die Kokille (12 oder 13) auf undurchlässige Art und Weise mit der Aussparung (11d) verbunden ist.

8. Entwässerungssystem, Rohrleitungssystem nach Anspruch 1, **dadurch gekennzeichnet, dass** die Winkelindexierungseinrichtungen aus internen Vorsprüngen an den Enden der Rohrkrümmer bzw. Elemente bestehen, und mit den zusätzlichen internen Vertiefungen (Kerben) am Ende der Elemente und/oder Rohrkrümmer in Verbindung stehen können.

9. Entwässerungssystem, Rohrleitungssystem nach Anspruch 1, **dadurch gekennzeichnet, dass** man die gekrümmte Einheit (11) und die Elemente zum Verschließen (12) oder (13) durch Kunststofieinspritzung erhält.

## Claims

1. System of pipework for a device for filtering and pumping water for a swimming pool basin, comprising filtration means and pumping means each housed in a compact unit mounted with the panels particularly of the swimming pool basin, the said unit comprising a compartment (A) housing the filtration means in communication with the water of the basin, and a compartment (B) out of the water and containing the pumping means, **characterized in that** it comprises:
* on the same side as the filtration compartment (A), and for the intake:
- an assembly made up of two 90° elbows (1) and (2) which are assembled and angularly indexed, one of the elbows (1) having arrangements (1b) for coupling to the bottom of the member containing the filtration means, while the other elbow (2) has arrangements for coupling with a straight element (3);
- the straight element (3) is coupled at its other end to a 90° elbow (4) identical to the previous one (2), the said elbow (4) collaborating with means capable of ensuring the sealed penetration of a dividing wall separating the compartments (A) and (B);
* on the same side as the pumping compartment (B) and for the intake, two 90° elbows (5) and (6) which are assembled and angularly indexed and both identical to the other 90° elbows (4) and (2), one of the elbows (5) being coupled to a straight element (7) connected to means capable of ensuring the sealed penetration of the dividing wall, the other elbow (6) being connected to the pump intake;
* on the same side as the pumping compartment (B) and for the delivery, two 90° elbows (8) and (9) which are assembled and angularly indexed and identical, one of the elbows (9) being coupled to a straight element (10) connected to means capable of ensuring the sealed penetration of the dividing wall, the other elbow (8) being connected to the delivery side of the pump;
* on the same side as the filtration compartment and for delivery, an elbowed assembly (11) exhibiting a recess (11d) which can be shut off at will either by a solid element (12) or by an element (13) exhibiting arrangements (13b) for coupling to a lateral delivery nozzle, one of the ends of the said assembly exhibiting arrangements for coupling with means for the sealed penetration of the wall, while the other end exhibits arrangements (11e) for coupling to a frontal delivery nozzle.

2. System of pipework according to Claim 1, **characterized in that** the arrangements for coupling the assembly (1-2) to the bottom of the member containing the filtration means, consist of a thrust plate (1b) with a recess formed near one of the ends of one of the elbows (1), so that the said end protrudes from the plate (1b) to allow for the centring of a cylindrical well containing the filtration means and the bottom of which rests on the said plate via a compression seal.

3. System of pipework according to Claim 1, **characterized in that** the ends (11a) and (11b) of the elbowed assembly (11) are parallel and offset from one another, being connected by a straight transverse element (11c).

4. System of pipework according to Claim 1, **characterized in that** the recess (11d) of the elbowed assembly (11) is formed in the region of the straight element (11c) and of its rounded zones for connection with the ends (11a and 11b), the said recess (11d) delimiting a shell of semicircular cross section.

5. System of pipework according to Claim 4, **characterized in that** the element for shutting off the recess (11d) consists of a shell (12) of complementing and semicircular cross section.

6. System of pipework according to Claim 4, **characterized in that** the element for shutting off the recess (11d) consists of a shell (13) of complementing and semicircular cross section in communication with a circular sleeve (13a) formed as a protrusion from its generatrices and the free end of which has arrangements for coupling to the lateral delivery nozzle.

7. System of pipework according to either one of Claims 5 and 6, **characterized in that** the shell (12 or 13) is secured to the recess (11d) in a sealed manner.

8. System of pipework according to Claim 1, **characterized in that** the angular indexing means consist of internal studs formed at the ends of the elbows and/or elements and capable of collaborating with complementing internal notches formed at the ends of the elements and/or elbows.

9. System of pipework according to Claim 1, **characterized in that** the elbowed assembly (11) and the shutting-off elements (12) or (13) are obtained by injection-moulding of a plastic.
